Europäisches Patentamt

European Patent Office

Office européen des brevets

(11) Veröffentlichungsnummer: **0 376 915**
**A2**

## (12) EUROPÄISCHE PATENTANMELDUNG

(21) Anmeldenummer: **89890330.7**

(22) Anmeldetag: **21.12.89**

(51) Int. Cl.5: **B03C 3/00, F01N 3/02**

(30) Priorität: **28.12.88 DE 3844141**

(43) Veröffentlichungstag der Anmeldung:
**04.07.90 Patentblatt 90/27**

(84) Benannte Vertragsstaaten:
**AT DE ES FR GB IT NL SE**

(71) Anmelder: **VOEST-ALPINE AUTOMOTIVE Gesellschaft m.b.H.**
**Derfflingerstrasse 15**
**A-4017 Linz(AT)**

(72) Erfinder: **Pfeifer, Ulf, Dipl.-Ing.-Dr.**
**Pötzleinsdorferstrasse 172**
**A-1180 Wien(AT)**
Erfinder: **Kaser, Artur, Dipl.-Ing.**
**Nr. 115**
**A-4641 Steinhaus(AT)**

(74) Vertreter: **Matschnig, Franz, Dipl.-Ing.**
**Siebensterngasse 54**
**A-1070 Wien(AT)**

(54) **Elektrostatischer Russkonverter.**

(57) Ein elektrostatischer Rußkonverter für Verbrennungsgase mit einem Gehäuse (1), das eine Gaszuführung und eine Gasabführung aufweist, mit zumindest einer Zentralelektrode (9) in der Symmetrieachse des Gasstromes zwischen Gaszuführung und Gasabführung und mit einer Abscheide-Elektrodenanordnung (11) zwischen der zumindest einen Zentralelektrode (9) und dem Gehäuse (1), die als elektrische Heizung ausgebildet ist, wobei jede Zentralelektrode (9) einerseits und die Abscheide-Elektrodenanordnung (11) andererseits an Hochspannung legbar sind. Hiebei ist die Abscheide-Elektrodenanordnung (11) von mehreren einzelnen Heizleitern (12) gebildet und es ist zwischen der zumindest einen Zentralelektrode (9) und den Heizleitern (12) eine durchbrochene Gasführung vorgesehen, durch welche zwischen der Gasführung und dem Gehäuse (1) ein strömungsberuhigter äußerer Raum geschaffen ist, in welchem sich die Heizleiter befinden.

FIG. 1

## Elektrostatischer Rußkonverter

Die Erfindung betrifft einen elektrostatischen Rußkonverter für Verbrennungsgase, insbesondere von Dieselmotoren, der die in den Verbrennungsgasen enthaltenen Rußpartikel abscheidet und verbrennt, nach dem Oberbegriff des Anspruches 1.

Aus der JP 59-85 415 A ist ein derartiger Rußkonverter bekannt, bei welchem sich zwischen der Zentralelektrode und der Abscheide-Elektrodenanordnung an der Innenwand des Gehäuses keine weiteren Bauteile oder Einbauten befinden. Dementsprechend durchsetzt der volle Gasstrom der Verbrennungsgase den ganzen von der Abscheide-Elektrodenanordnung umschlossenen Raum. Die Abscheide-Elektrodenanordnung ist gleichzeitig als elektrische Heizung ausgebildet, wozu sie außer mit der Hochspannung mit einer Heizspannung beaufschlagt werden kann. Mit dem bekannten Rußkonverter wird angestrebt, daß sich die Rußpartikel von der Zentralelektrode zu der Abscheide-Elektrodenanordnung bewegen, sich dort absetzen und zeitweise durch elektrische Erhitzung der Abscheide-Elektrodenanordnung verbrannt werden. Dieses Ziel wird jedoch nur unvollkommen erreicht. Da die Rußpartikel, sobald sie an der Abscheide-Elektrodenanordnung ihre Ladung abgegeben haben, ihre Haftfähigkeit größtenteils verlieren, besteht eine hohe Wahrscheinlichkeit, daß sie von dem Gasstrom, welcher die ganze Anordnung durchsetzt, fortgeblasen werden. Dies dürfte insbesondere bei Vollast des Motors kaum vermeidbar sein. Daß die Abscheide-Elektrodenanordnung dem vollen Gasstrom ausgesetzt ist, hat die weitere Konsequenz, daß sie für eine sehr hohe, wahrscheinlich prohibitive hohe Heizleistung ausgelegt sein muß, damit die Rußpartikel entzündet werden können. Ein großer Teil der aufgewandten Heizenergie wird nämlich von der Abscheide-Elektrodenanordnung an den vorbeifließenden Gasstrom abgegeben und steht damit für die Erhitzung der Elektrodenanordnung nicht zur Verfügung.

Dementsprechend liegt der Erfindung die Aufgabe zugrunde, den bekannten Rußkonverter so weiterzubilden, daß mit ihm bei geringer Heizleistung unter allen Betriebsbedingungen ein gleichmäßig hoher Rußminderungsgrad erzielbar ist.

Diese Aufgabe wird erfindungsgemäß mit dem im neuen Anspruch 1 gekennzeichneten Rußkonverter gelöst, wobei vorteilhafte Ausgestaltungen aus den Unteransprüchen hervorgehen.

Beim erfindungsgemäßen Rußkonverter werden nur die einzelnen Heizleiter erhitzt, die eine relativ kleine Masse haben. Deshalb ist die Heizleistung, die zur Erzielung der Entzündungstemperatur des Rußes notwendig ist, ebenfalls gering und z.B. viel kleiner, als für die Erhitzung einer ganzflächigen Elektrodenanordnung notwendig wäre. Eine weitere, beträchtliche Reduzierung der notwendigen Heizleistung wird dadurch erreicht, daß sich die Heizleiter in dem strömungsberuhigten Raum außerhalb der Gasführung befinden, wo sie von dem Haupt-Gasstrom innerhalb der Gasführung nicht "gekühlt" werden können. Beide Maßnahmen zusammen, die Bildung der Abscheide-Elektrodenanordnung aus einzelnen Heizleitern und deren Abschirmung gegenüber dem Haupt-Gasstrom durch die Gasführung, reduzieren die notwendige Heizleistung auf einen so niedrigen Wert, daß der Einsatz des erfindungsgemäßen Rußkonverters auch in Fahrzeugen ohne weiteres möglich ist, wo für die Heizung nur die in der Kapazität beschränkte Fahrzeugbatterie zur Verfügung steht. Die strömungsmäßige Abschirmung der Heizleiter durch die durchbrochene Gasführung hat den weiteren wesentlichen Vorteil, daß die einmal an den Heizleitern abgeschiedenen Rußpartikel dort verbleiben, obwohl · sie nach der Abscheidung nur noch schwach haften, weil sie sich dann in dem strömungsberuhigten äußeren Raum befinden. Die Strömung im äußeren Raum reicht aber aus, um die Zufuhr des für den Abbrand des Rußes erforderlichen Sauerstoffes zu gewährleisten. Durch den Strömungswiderstand der Gasführung und den dadurch bedingten Druckabfall über deren Länge stellt sich im äußeren Raum von selbst die gewünschte geringe Strömungsgeschwindigkeit ein.

Die EP 256 325 A2 beschreibt einen Rußabscheider mit einem Gehäuse, einer durchbrochenen Gasführung darin und einer innerhalb der Gasführung angeordneten Zentralelektrode, deren Gegenelektrode das Gehäuse ist. Bei diesem Rußabscheider ist der Raum zwischen der durchbrochenen Gasführung und dem Gehäuse mit Filtermaterial vollständig ausgefüllt. Andererseits ist eine elektrische Heizung, gleich welcher Art, zur Verbrennung der Rußpartikel nicht vorgesehen. Die Rußpartikel wandern aufgrund der Pulsationen des Abgasstromes und unterstützt durch das elektrische Hochspannungsfeld zwischen Zentralelektrode und Gehäuse aus dem Gasstrom in das Filtermaterial, in welchem sie festgehalten werden. Die durchbrochene Gasführung hat bei dem bekannten Rußabscheider nur die Aufgabe, das Filtermaterial in dem äußeren Raum zu halten; eine weitergehende Funktion kommt ihr erkennbar nicht zu.

Aus der DE 36 22 623 A1 ist ebenfalls ein elektrostatischer Rußkonverter mit einer durchbrochenen Gasführung bekannt. Dort umschließt diese Gasführung jedoch nicht den eigentlichen Gasstrom. Die Gasführung ist vielmehr durch eine Querwand gesperrt, sodaß der ganze Gasstrom

2

durch die Gasführung hindurch in einen äußeren umgebenden Raum und von diesem wieder zurück durch einen Filter und die Gasführung in das Innere derselben eintritt. Die Gasführung schafft also keinen strömungsberuhigten äußeren Raum.

In Ausgestaltung der Erfindung sind die einzelnen Heizleiter einzeln oder gruppenweise mit Heizstrom beaufschlagbar. Dadurch wird nicht nur eine weitere erhebliche Stromeinsparung erreicht, sondern bei geeigneter Wahl der Sequenz auch die Möglichkeit, den Abbrand des Rußes den Betriebsbedingungen anzupassen.

In einer Ausführungsform der Erfindung ist die Gasführung ein Lochrohr und die einzelnen Heizleiter liegen parallel auf Erzeugenden eines Zylinders oder Kegels. So sind die Heizleiter im wesentlichen in Strömungsrichtung angeordnet, was gute Sauerstoffzufuhr über deren ganze Länge und damit besseren Rußabbrand zur Folge hat. Außerdem ergibt sich dadurch eine einfache Bauweise und Montage der Heizleiter.

In einer anderen bevorzugten Ausführungsform bilden Heizleiter in Achsrichtung hintereinanderliegende Schlaufen oder Spiralen mit mehreren Windungen. Dadurch kann die elektrostatische Abscheidewirkung dem Konzentrationsverlauf der Partikel in Strömungsrichtung und der Heizstrom und die Gestaltung der einzelnen Schlaufen oder Spiralen der Abscheidewirkung angepaßt werden.

Wenn weiters die Gasführung viele kleine Durchbrechungen aufweist und aus einem glatten, nicht leitenden Werkstoff besteht, dient sie ausschließlich der Führung des Gasstromes, ohne das elektrostatische Feld zu verzerren oder Rußpartikel auf ihrem Weg zu den Abscheideelektroden zu behindern. Zur Verbesserung der Strömung im Ringraum können die Durchbrechungen vorne und hinten größer sein.

In Ausgestaltung der Erfindung wird vorgeschlagen, das Gehäuse zumindest teilweise aus einem elektrisch und thermisch isolierenden Material, z.B. Keramik, zu fertigen. Dadurch lagert sich weniger Ruß auf der Innenseite des Gehäuses an und die Wärmeableitung nach außen und damit auch der Stromverbrauch werden vermindert. Außerdem wird dadurch die isolierende Durchführung der Heizleiter durch das Gehäuse besonders einfach.

In weiterer Ausgestaltung der Erfindung werden die Heizleiter auch im Abstand vom Gehäuse angeordnet. Dadurch wird die Umströmung der Heizleiter weiter verbessert, sodaß sich an der Innenseite des Gehäuses überhaupt keine Partikel mehr festsetzen können und Wärmeableitung nach außen und Stromverbrauch weiter vermindert werden.

Weiters ist es möglich, die Innenseite des Gehäuses mit den Heizleitern folgenden konkaven Kanälen zu profilieren, die - am stärksten wenn deren Querschnitt ein Kegelschnitt ist und sich die Heizleiter in ihrem Brennpunkt befinden - die Wärmestrahlung auf die Gasführung richten, wodurch auch Rußteilchen, die sich an der Außenwand der Gasführung festsetzen, abgebrannt werden.

Ausführungsbeispiele der Erfindung werden im folgenden anhand von Abbildungen näher beschrieben. In diesen zeigen:

Figur 1: Längsschnitt durch eine erste Ausführungsform des erfindungsgemäßen Rußkonverters,

Figur 2: Querschnitt nach AA in Fig. 1

Figur 3: Querschnitt wie Fig. 2 für zwei Varianten,

Figur 4: Längsschnitt durch eine zweite Ausführungsform des erfindungsgemäßen Rußkonverters,

Figur 5: Querschnitt nach BB in Fig. 4,

Figur 6: Querschnitt analog Fig. 2 und 3, durch eine ebene Variante.

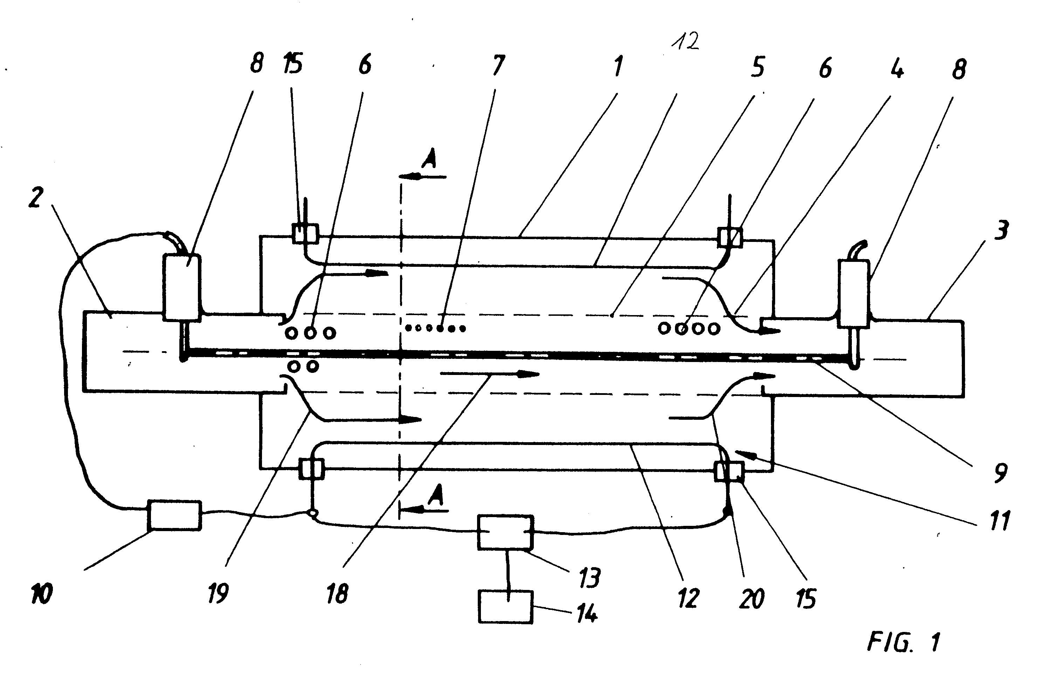

Der Rußkonverter gemäß Fig. 1 umfaßt ein Mantel-Gehäuse 1, eine Gaszuführung in Form eines Gaszufuhrrohres 2 und eine Gasabführung in Form eines Gasabfuhrrohres 3. Zwischen letzteren erstreckt sich eine Gasführung in Form eines Lochrohres 4, das zusammen mit dem Gaszufuhrrohr 2 und dem Gasabfuhrrohr 3 einen Kanal für die hindurchströmenden Verbrennungsgase bildet. Das Lochrohr 4 hat viele Durchbrechungen 5, die in Form und Durchmesser beliebig ausgeführt sein können; im dargestellten Ausführungsbeispiel sind am Anfang und Ende des Lochrohres 4 große runde Durchbrechungen 6 und im Mittel bereich kleine runde Durchbrechungen 7 vorhanden.

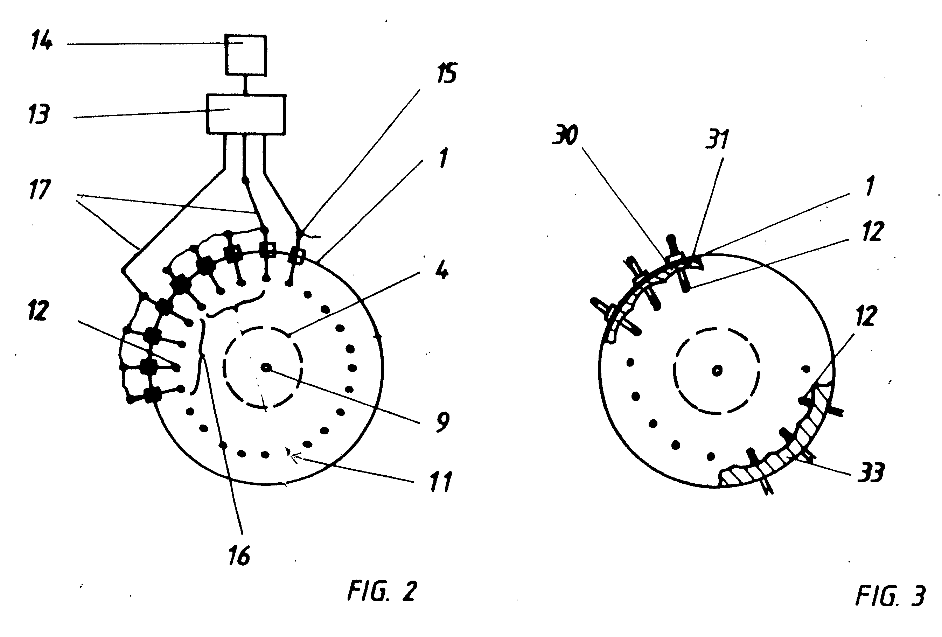

In den Gaszu- und Abfuhrrohren 2, 3 sind isolierende Elektrodenhalter 8 befestigt, zwischen denen sich eine in der geometrischen Achse liegende Zentralelektrode 9 erstreckt. In dem vom Lochrohr 4 und vom Mantel-Gehäuse 1 begrenzten Ringraum befindet sich eine Abscheide-Elektrodenanordnung 11. Sie besteht in der Ausführungsform der Figuren 1 und 2 aus einer Anzahl sich in Längsrichtung erstreckender Heizleiter 12, die auf einem gedachten Zylinder mit der Zentral elektrode 9 als Achse liegen. Die Enden dieser Heizleiter 12 sind durch Isolatoren 15 hindurch nach außen geführt, wo sie mit einer Hochspannungsquelle 10 und mit einer Heizstromquelle 14 verbunden sind.

Die Hochspannungsquelle 10 liefert eine Gleichspannung, die pulsierend sein kann, an alle Heizleiter 12, wobei in der Regel die Zentralelektrode 9 negativ und die Heizleiter 12 positiv gepolt sind. Dadurch wird zwischen der Zentralelektrode 9 und den Heizleitern 12 ein elektrostatisches Feld aufgebaut, das die im Abgas enthaltenen Rußpartikel nach außen durch die Durchbrechungen 5 des Lochrohres 4 hindurch zu den Heizleitern ablenkt.

Die Heizstromquelle 14 ist über einen Heizstromverteiler 13 mit Gruppen 16 von Heizleitern 12 über Anschlußdrähte 17 verbunden (Fig. 2). Dadurch ist es möglich, diese Gruppen 16 sequentiell mit der Heizstromquelle 14 zu verbinden.

Die Fig. 3 zeigt zwei Varianten der ersten Ausführungsform, die sinngemäß auch bei der zweiten Ausführungsform anwendbar sind. In der oberen Hälfte der Fig. 3 ist an der Innenseite des Mantel-Gehäuses 1 ein Keramikeinsatz 30 befestigt, der innen Kanäle 31 bildet, die geschnitten in einer Normal ebene zum Heizleiter 12 Kegelschnitte sind, in deren Brennpunkt sich die Heizleiter 12 befinden. In der unteren Hälfte des Schnittes ist unter Weglassung eines metallischen Mantel-Gehäuses 1 nur ein Keramikgehäuse 33 vorgesehen, das natürlich innen auch glatt sein könnte. Bei diesem lassen sich die Heizleiter ohne Isolatoren nach außen führen.

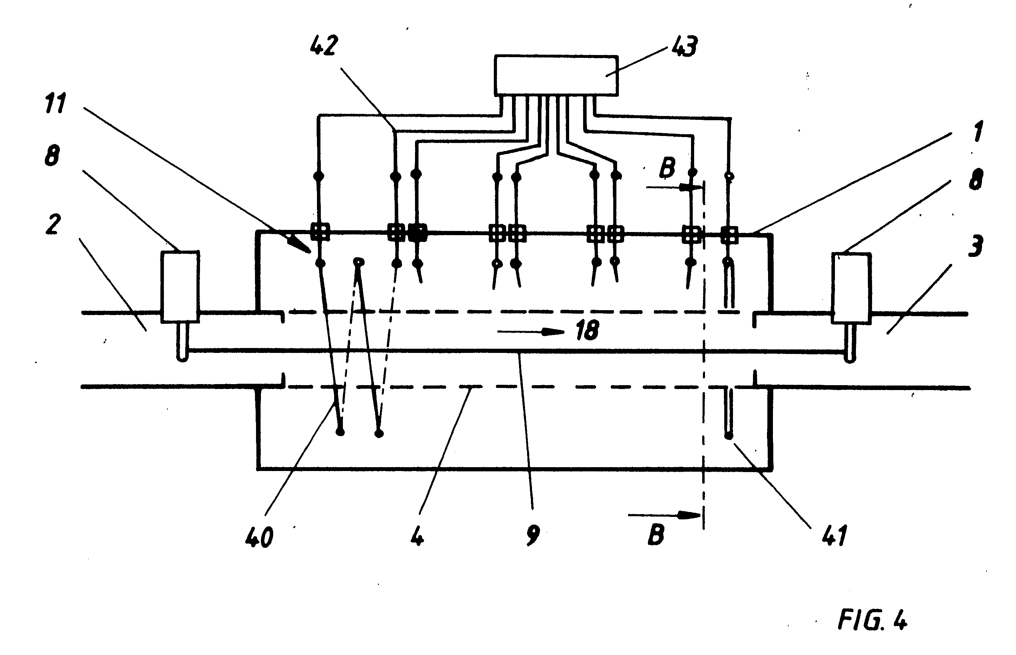

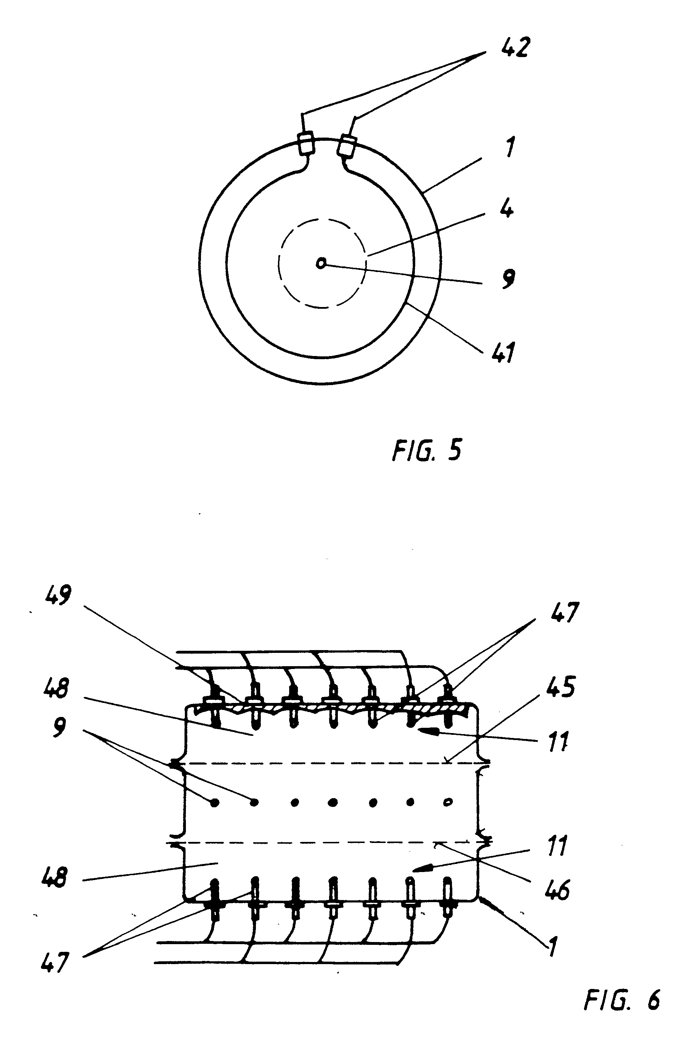

Figuren 4 und 5 zeigen die andere Ausführungsform der Erfindung, wobei gleiche Teile die gleichen Bezugszahlen tragen. Diese unterscheidet sich von der ersten nur in der Ausbildung der Abscheide-Elektrodenanordnung. Diese umfaßt hier schraubenlinienförmige Heizleiter (Heizspiralen) 40 oder schlaufenförmige Heizleiter 41, die in Strömungsrichtung hintereinander angeordnet und über Anschlußleitungen 42 mit dem sequentiell betreibbaren Heizstromverteiler 43 verbunden sind. Das elektrostatische Feld wird also zwischen der Zentralelektrode 9 und den Heizspiralen 40 bzw. schlaufenförmigen Heizleitern 41 aufgespannt. Auch diese Ausführungsform kann in ähnlicher Weise wie die erste Ausführungsform variiert werden.

Fig. 6 schließlich zeigt noch eine Variante der Erfindung, bei der die Gasführung aus zwei perforierten Platten 45, 46 besteht, in deren Symmetrieebene sich mehrere Zentralelektroden 9 befinden. Die Platten 45, 46 und das Gehäuse 1 begrenzen zwei Räume 48, in denen jeweils Heizleiter 47 nebeneinander in Strömungsrichtung verlaufend untergebracht sind. Die Heizleiter können auch mit keramischen Reflektoreinsätzen 49 versehen sein.

Die Arbeitsweise ist bei allen Ausführungsformen im Prinzip dieselbe: Die Verbrennungsgase strömen (Fig. 1 bis 5) durch das Gaszufuhrrohr 2 ein und in das Lochrohr 4, in dem sie in Richtung des Pfeiles 18 zum Gasabfuhrrohr 3 strömen. Dadurch herrscht über die Länge des Lochrohres 4 ein Druckgefälle. Dieses läßt, erleichtert durch die größeren Durchbrechungen 6, eine langsame Nebenströmung in Richtung der Pfeile 19 und 20 (Fig. 1) in dem Raum zwischen Lochrohr 4 und Mantel-Gehäuse 1 entstehen. Die durch das elektrostatische Feld durch die Durchbrechungen 7 hindurch zu den Heizleitern 12 abgelenkten Rußpartikel lagern sich an den Heizleitern 12 an, die sequentiell mit Heizstrom versorgt werden. Die Sequenz kann starr sein oder sich in Abhängigkeit von den Betriebsbedingungen selbständig einstellen. Durch den sequentiellen Anschluß der Heizleiter 12 ist es möglich, mit geringem Stromverbrauch wenige Heizleiter sehr stark zu erhitzen, so daß die angelagerten Rußpartikel sich entzünden. Zum Verbrennen der Rußpartikel wird aber auch Sauerstoff benötigt. Dieser, und ggf. auch durch Entladungen entstehendes Ozon, werden durch die Nebenströmung in ausreichender Menge zugeführt, ohne aber unverbrannte Rußpartikel von den Heizleitern 12 wegzureißen.

## Ansprüche

1. Elektrostatischer Rußkonverter für Verbrennungsgase mit einem Gehäuse (1), das eine Gaszuführung und eine Gasabführung aufweist, mit zumindest einer Zentralelektrode (9) in der Symmetrieachse des Gasstromes zwischen Gaszuführung und Gasabführung und mit einer Abscheide-Elektrodenanordnung (11) zwischen der zumindest einen Zentralelektrode (9) und dem Gehäuse (1), die als elektrische Heizung ausgebildet ist, wobei jede Zentralelektrode (9) einerseits und die Abscheide-Elektrodenanordnung (11) andererseits an Hochspannung legbar sind, dadurch gekennzeichnet, daß die Abscheide-Elektrodenanordnung (11) von mehreren einzelnen Heizleitern (12, 40, 41, 47) gebildet ist, und daß zwischen der zumindest einen Zentralelektrode (9) und den Heizleitern (12; 40; 41; 47) eine durchbrochene Gasführung vorgesehen ist, durch welche zwischen der Gasführung und dem Gehäuse (1) ein strömungsberuhigter äußerer Raum geschaffen ist, in welchem sich die Heizleiter befinden.

2. Rußkonverter nach Anspruch 1, dadurch gekennzeichnet, daß die Heizleiter (12, 40, 41, 47) einzeln oder in Gruppen (16) mit einer Heizstromquelle (14) verbindbar sind.

3. Rußkonverter nach Anspruch 1 oder 2, dadurch gekennzeichnet, daß die Gasführung ein Lochrohr (4) ist und die Heizleiter (12) auf Erzeugenden eines Zylinders (21) oder Kegels mit der Zentralelektrode (9) als Achse liegen.

4. Rußkonverter nach einem der Ansprüche 1 bis 3, dadurch gekennzeichnet, daß die einzelnen Heizleiter (40; 41) in Achsrichtung der Gasführung hintereinander angeordnete einzelne Schlaufen oder Spiralen mit mehreren Windungen sind.

5. Rußkonverter nach einem der Ansprüche 1 bis 4, dadurch gekennzeichnet, daß die Gasführung viele, relativ kleine Durchbrechungen (7) aufweist und aus einem glatten, elektrisch nicht leitenden Werkstoff besteht.

6. Rußkonverter nach Anspruch 5, dadurch gekennzeichnet, daß die Gasführung in Nähe der Gaszu- bzw. Gasabführung größere Durchbrechungen (6) aufweist, als in ihrem Mittelbereich.

7. Rußkonverter nach einem der Ansprüche 1 bis 6, dadurch gekennzeichnet, daß das Gehäuse (1) zumindest teilweise aus einem thermisch und elektrisch isolierenden Werkstoff, vorzugsweise Keramik, besteht.

8. Rußkonverter nach einem der Ansprüche 1 bis 7, dadurch gekennzeichnet, daß die Heizleiter (12, 40, 41; 47) mit Abstand vom Gehäuse (1) angeordnet sind.

9. Rußkonverter nach einem der Ansprüche 1 bis 8, dadurch gekennzeichnet, daß die Innenseite des Gehäuses (1) mit den Heizleitern (12; 47) folgenden konkaven Kanälen (31) profiliert ist.

10. Rußkonverter nach Anspruch 9, dadurch gekennzeichnet, daß die Kanäle (31) im Querschnitt Kegelschnitte sind und die Heizleiter (12) in deren Brennpunkten liegen.

FIG. 1

FIG. 2

FIG. 3

EP 0 376 915 A2

FIG. 4

FIG. 5

FIG. 6